(19) Europäisches Patentamt
European Patent Office
Office européen des brevets

(11) Veröffentlichungsnummer : **0 088 950**
**B1**

(12) # EUROPÄISCHE PATENTSCHRIFT

(45) Veröffentlichungstag der Patentschrift : **12.02.86**

(51) Int. Cl.⁴ : **C 08 L 75/04**, C 08 K 3/32

(21) Anmeldenummer : **83102054.0**

(22) Anmeldetag : **03.03.83**

(54) **Polyol-Vormischung zur Herstellung von flammwidrigen Polyurethanschaumstoffen.**

(30) Priorität : **11.03.82 DE 3208693**

(43) Veröffentlichungstag der Anmeldung : **21.09.83 Patentblatt 83/38**

(45) Bekanntmachung des Hinweises auf die Patenterteilung : **12.02.86 Patentblatt 86/07**

(84) Benannte Vertragsstaaten : **AT BE CH DE FR GB IT LI NL SE**

(56) Entgegenhaltungen :
**EP-A- 0 049 763**
**DE-A- 2 359 700**
**DE-B- 2 330 174**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Staendeke, Horst, Dr.**
**Alte Honrather Strasse 22**
**D-5204 Lohmar 21 (DE)**
Erfinder : **Dany, Franz-Josef, Dr.**
**Heddinghovener Strasse 47**
**D-5042 Erftstadt (DE)**
Erfinder : **Kandler, Joachim, Dr.**
**Amselweg 10**
**D-5042 Erftstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft eine lagerfähige Polyol-Vormischung zur Herstellung von flammwidrigen Polyurethanschaumstoffen, welche entweder aus einem Gemisch eines Polyesterpolyols oder Polyetherpolyols mit einem Ammoniumpolyphosphat mit bestimmten Eigenschaften oder aus einem Gemisch eines Polyetherpolyols mit einem Schaumstabilisator, einem Aminkatalysator, einem Treibmittel und dem Ammoniumpolyphosphat als Flammschutzmittel besteht.

Es ist bekannt, daß man Polyurethanmaterialien dadurch Flammwidrigkeit verleihen kann, daß man einem Polyol-Polyisocyanat-Reaktionsgemisch nicht reaktionsfähige phosphor- und stickstoffhaltige Verbindungen einverleibt.

So beschreibt die DE-AS 1 283 532 ein Verfahren zur Herstellung von flammwidrigen Polyurethanen aus hochmolekularen Polyhydroxylverbindungen, Polyisocyanaten, Katalysatoren und Ammoniumphosphat als Flammschutzmittel sowie gegebenenfalls Treibmittel und oberflächenaktiven Substanzen unter Formgebung, welches dadurch gekennzeichnet ist, daß man als Flammschutzmittel ein Ammoniumpolyphosphat der allgemeinen Formel

$$H_{(n-m)+2}(NH_4)_mP_nO_{3n+1}$$

in der n eine ganze Zahl mit einem über 10 liegenden Durchschnittswert ist und m eine ganze Zahl bis maximal n + 2 bedeutet und $m_{/n}$ zwischen etwa 0,7 und 1,1 liegt, in Mengen von 5-15 Masseprozent des Ansatzes verwendet.

Eine bevorzugte Ausführungsform des bekannten Verfahrens besteht darin, zunächst ein Polyhydroxylverbindung-Ammoniumpolyphosphat-Gemisch herzustellen, ehe sämtliche weiteren Bestandteile zwecks Herstellung des Polyurethanschaumstoffes kombiniert werden. In diesem Falle wird das Ammoniumpolyphosphat vorzugsweise in Mengen von etwa 5 bis 15 Masseprozent der Mischung verwendet.

Eine weitere beispielhafte Ausführungsform der DE-AS 1 283 532 schlägt vor, das Ammoniumpolyphosphat mit einem oder mehreren der zur Herstellung des Schaumstoffes erforderlichen Ausgangsprodukten, mit Ausnahme der Polyisocyanatverbindung zu mischen und gegebenenfalls zu einem späteren Seitpunkt durch Zugabe der Polyisocyanatverbindung zu dem bereits hergestellten Gemisch die Polykondensationsreaktion einzuleiten.

Die gemäß den bevorzugten Ausführungsformen der DE-AS 1 283 532 hergestellten isocyanatfreien Gemische werden im allgemeinen als Polyol-Vormischungen bezeichnet. Derartige Vormischungen sollen insbesondere lagerfähig sein, d. h. daß während der Lagerung keine Zersetzung einer der Gemischkomponenten oder eine unerwünschte Nebenreaktion eintreten darf. Je nach dem Haftwassergehalt des Ammoniumpolyphosphates, bedingt durch dessen Herstellung und Handhabung, tritt nämlich bei längerer Lagerung der Polyol-Vormischung eine durch Hydrolyse bewirkte teilweise Spaltung des Ammoniumpolyphosphates ein, wobei die Spaltstücke sauer reagieren und ihre ursprüngliche Wasserunlöslichkeit einbüßen. Demzufolge ergibt die ursprünglich in die Polyol-Vormischung eingebrachte Polyphosphatmenge im fertigen Polyurethanschaumstoff nicht den erwarteten Flammschutzeffekt.

Es wurde nunmehr gefunden, daß die beim Einbringen der bekannten Ammoniumpolyphosphate in Polyol-Vormischungen sich ergebenden Nachteile vermieden werden, wenn man ein nahezu wasserfreies Ammoniumpolyphosphat mit einer geringen Säurezahl in die Polyol-Vormischung einbringt.

Die Erfindung betrifft somit eine lagerfähige Polyol-Vormischung zur Herstellung von flammwidrigen Polyurethanschaumstoffen, bestehend aus einem langkettigen Ammoniumpolyphosphat der allgemeinen Formel

$$H_{(n-m)+2}(NH_4)_mP_nO_{3n+1},$$

in der n einen ganzzahligen Durchschnittswert von 100 bis 1 000, m eine ganze Zahl bis maximal n + 2 bedeutet und m/n einen Wert von etwa 1 darstellt, und

a) einem Polyesterpolyol oder Polyetherpolyol oder

b) einem Polyetherpolyol sowie mindestens einer der Komponenten, bestehend aus einem Schaumstabilisator, einem Aminkatalysator und einem Treibmittel, als Flammschutzmittel, dadurch gekennzeichnet, daß das Ammoniumpolyphosphat eine Säurezahl von 0,01 bis etwa 5 mg KOH/g, einen Wassergehalt von 0,01 bis 0,5 Masse-% sowie wasserlösliche Anteile in 25 °C warmem Wasser von 0,5 bis etwa 15 Masse-% besitzt und das Ammoniumpolyphosphat im wesentlichen aus der kristallinen Modifikation II besteht und dadurch hergestellt wurde, daß man ein Gemisch von Phosphorpentoxid und Ammoniumorthophosphat im Molverhältnis 1 : 0,9 bis 1 : 1,1 mit 0,1 bis 15 Mol% Melamin oder dessen Kondensationsprodukten Melam, Melem oder Melon — berechnet als Melamin und bezogen auf das eingesetzte Phosphorpentoxid — bei einer Temperatur zwischen 50 und 150 °C in Gegenwart von überschüssigem Ammoniak reagieren läßt und man das Reaktionsprodukt anschließend bei Temperaturen zwischen 200 und 400 °C tempert.

Das Ammoniumpolyphosphat besitzt vorteilhafterweise folgende Korngrößenverteilung in Prozenten :

| | |
|---|---|
| < 400 μm | > 99,5 % |
| < 150 μm | > 99,5 % |
| < 75 μm | 99,5 % |
| < 45 μm | 98,0 % |
| < 25 μm | 92,0 % |

Ein weiteres bevorzugtes Merkmal der erfindungsgemäßen Mischung besteht darin, daß das Ammoniumpolyphosphat eine Säurezahl von 0,1 bis 2 mg KOH/g, einen Wassergehalt von 0,01 bis 0,2 Masse-%, sowie wasserlösliche Anteile in 25 °C warmem Wasser von 3 bis 10 Masse-% besitzt.

Ein derartiges Produkt stellt beispielsweise das Handelsprodukt® Exolit 422 (Firma Hoechst Aktiengesellschaft, Frankfurt/Main) dar, das durch folgende physikalische Merkmale gekennzeichnet ist :

Siebanalyse :

Kornanteil

| | |
|---|---|
| < 400 μm | > 99,5 % |
| < 150 μm | > 99,5 % |
| < 75 μm | 99,5 % |
| < 45 μm | 98,0 % |
| < 25 μm | 92,0 % |

$H_2O$-Gehalt : 0,09 Masse-%

pH-Wert einer 1 gewichtsprozentigen Suspension : 6,1

Säurezahl : 0,5 mg KOH/g

Viskosität der 10 gewichtsprozentigen wäßrigen Suspension bei 25 °C : 90 mPa.s

Gelöste Anteile einer Suspension von 10 g® Exolit 422 in 100 ml Wasser bei 25 °C nach 1 Stunde : 7,5 Masse-%.

Die erfindungsgemäße Polyol-Vormischung zeichnet sich gegenüber vergleichbaren bekannten Mischungen besonders dadurch aus, daß sie auch bei längerer Lagerung bzw. Vorratshaltung ihre anfängliche Viskosität nur unwesentlich erhöht, so daß sie jederzeit zur Herstellung von Polyurethanschaumstoffen einsatzfähig ist. Dieses Ergebnis ist auf die speziellen vorteilhaften Eigenschaften des in der Vormischung enthaltenen Ammoniumpolyphosphates zurückzuführen.

Die im vorhergehenden genannten vorteilhaften Eigenschaften der erfindungsgemäßen Polyol-Vormischung sollen durch die nachfolgenden Beispiele näher erläutert werden.

## Beispiel 1

Es wurden die Säurezahlen des erfindungsgemäß verwendeten Ammoniumpolyphosphates in Form des® Exolit 422 (Produkt A) sowie des vergleichbaren Handelsproduktes® Phos Chek P/30 (Produkt B) der Fa. Monsanto (USA) in Abhängigkeit von der Lagerungsdauer bei 50 °C ermittelt. Das eingesetzte Produkt B besaß die nachfolgend genannten physikalischen Merkmale :

Siebanalyse :

Kornanteil

| | |
|---|---|
| < 400 μm | 99,5 % |
| < 150 μm | 99,0 % |
| < 75 μm | 98,0 % |
| < 45 μm | 91,0 % |
| < 25 μm | 49,0 % |

$H_2O$-Gehalt : 0,75 Masse-% ;

pH-Wert : 6,3 ;

Säurezahl : 5,6 mg KOH/g ;

Gelöste Anteile einer Suspension von 10 g des Produktes B in 100 ml Wasser bei 25 °C nach 1 Stunde : 16 Masse-% ;

Viskosität der 10 gewichtsprozentigen wäßrigen Suspension bei 25 °C : 31 mPa.s ;

Die erhaltenen Ergebnisse sind in der Tabelle 1 dargestellt.

(Siehe Tabelle 1 Seite 4 f.)

Tabelle 1

| Lagerungsdauer bei 50 °C (Std.) | Säurezahl (mg KOH/g) | |
|---|---|---|
| | Produkt A | Produkt B |
| 0 | 0,5 | 5,6 |
| 72 | 0,7 | 6,4 |
| 168 | 1,0 | 9,5 |
| 336 | 1,2 | 11,7 |

Beispiel 2

Es wurden die Viskositäten von verschiedenen Polyol-Vormischungen, bestehend aus einem Polyester-Polyol in Form von ® Desmophen 2200 (Firma Bayer Aktiengesellschaft, Leverkusen) und dem Produkt A bzw. B, bei 25 °C ermittelt, wobei die Viskosität des Polyester-Polyols bei 25 °C = 20,9 Pa.s betrug.

Die erhaltenen Ergebnisse sind in der Tabelle 2 dargestellt.

Tabelle 2

| Konzentration des Produktes A bzw. B im Polyol (g/100 g Suspension) | Viskosität bei 25 °C (Pa•s) | |
|---|---|---|
| | Gemisch aus Polyol und Produkt A | Gemisch aus Polyol und Produkt B |
| 10 | 23,2 | 24,4 |
| 20 | 29,2 | 34,0 |
| 30 | 40,8 | 55,2 |
| 40 | 84,0 | 132,0 |

Beispiel 3

Es wurde analog Beispiel 2 verfahren, jedoch wurde anstelle des Polyester-Polyols ein Polyether-Polyol mit der Bezeichnung ® Caradol 585-8 (Firma Shell Chemie, Frankfurt) eingesetzt. Das Polyether-Polyol besaß bei 25 °C eine Viskosität von 5,1 Pa.s. Die erhaltenen Ergebnisse sind in der Tabelle 3 dargestellt.

Tabelle 3

| Konzentration des Produktes A bzw. B im Polyol (g/100 g Suspension) | Viskosität bei 25 °C (Pa•s) | |
|---|---|---|
| | Gemisch aus Polyol und Produkt A | Gemisch aus Polyol und Produkt B |
| 10 | 5,8 | 6,3 |
| 20 | 7,5 | 8,4 |
| 30 | 10,4 | 14,6 |
| 40 | 18,7 | 33,0 |

Die in den Beispielen 2 bzw. 3 eingesetzten Polyole sind durch die nachfolgenden Merkmale gekennzeichnet :

Polyol gemäß Beispiel 2 : ® Desmophen 2200 ist ein verzweigter Polyester auf der Basis von Adipinsäure, Diethylenglykol und Triol. Das Produkt stellt eine schwach gelbgefärbte, bei Raumtemperatur hochviskose Flüssigkeit dar, die durch folgende Kenndaten charakterisiert ist :

| | |
|---|---|
| Dichte (bei 20 °C) | ca. 1,18 g/ml |
| Brechungsindex (bei 20 °C) | 1,477 4 ± 0,000 3 |
| Stockpunkt | – 13 °C |
| Flammpunkt | 215 °C |
| Hydroxylzahl | 60 ± 3 mg KOH/g |
| Säurezahl | < 1 mg KOH/g |
| Wassergehalt | < 0,1 Masse-% |

Polyol gemäß Beispiel 3 : ® Caradol 585-8 ist ein Polyether-Polyol mit mittlerer Funktionalität. Das Produkt stellt eine blaßgelbe, mittelviskose Flüssigkeit dar, die durch folgende Kenndaten charakterisiert ist :

| | |
|---|---|
| Dichte (bei 20 °C) | 1,101 g/ml |
| Flammpunkt | 200 °C |
| Hydroxylzahl | 580 mg KOH/g |
| Säurezahl | 0,1 mg KOH/g |
| Wassergehalt | 0,1 Masse-% |

**Patentansprüche**

1. Lagerfähige Polyol-Vormischung zur Herstellung von flammwidrigen Polyurethanschaumstoffen, bestehend aus einem langkettigen Ammoniumpolyphosphat der allgemeinen Formel

$$H_{(n-m)+2}(NH_4)_mP_nO_{3n+1},$$

in der n einen ganzzahligen Durchschnittswert von 100 bis 1 000, m eine ganze Zahl bis maximal n + 2 bedeutet und m/n einen Wert von etwa 1 darstellt, und

a) einem Polyesterpolyol oder Polyetherpolyol oder

b) einem Polyetherpolyol sowie mindestens einer der Komponenten, bestehend aus einem Schaumstabilisator, einem Aminkatalysator und einem Treibmittel, als Flammschutzmittel, dadurch gekennzeichnet, daß das Ammoniumpolyphosphat eine Säurezahl von 0,01 bis etwa 5 mg KOH/g, einen Wassergehalt von 0,01 bis 0,5 Masse-% sowie wasserlösliche Anteile in 25 °C warmem Wasser von 0,5 bis etwa 15 Masse-% besitzt und das Ammoniumpolyphosphat im wesentlichen aus der kristallinen Modifikation II besteht und dadurch hergestellt wurde, daß man ein Gemisch von Phosphorpentoxid und Ammoniumorthophosphat im Molverhältnis 1 : 0,9 bis 1 : 1,1 mit 0,1 bis 15 Mol% Melamin oder dessen Kondensationsprodukten Melam, Melem oder Melon — berechnet als Melamin und bezogen auf das eingesetzte Phosphorpentoxid — bei einer Temperatur zwischen 50 und 150 °C in Gegenwart von überschüssigem Ammoniak reagieren läßt und man das Reaktionsprodukt anschließend bei Temperaturen zwischen 200 und 400 °C tempert.

2. Polyol-Vormischung gemäß Anspruch 1, dadurch gekennzeichnet, daß das Ammoniumpolyphosphat folgende Korngrößenverteilung in Prozenten besitzt :

| | |
|---|---|
| < 400 μm | > 99,5 % |
| < 150 μm | > 99,5 % |
| < 75 μm | 99,5 % |
| < 45 μm | 98,0 % |
| < 25 μm | 92,0 % |

3. Polyol-Vormischung gemäß Anspruch 1 oder 2, dadurch gekennzeichnet, daß das Ammoniumpolyphosphat eine Säurezahl von 0,1 bis 2 mg KOH/g, einen Wassergehalt von 0,01 bis 0,2 Masse-%, sowie wasserlösliche Anteile in 25 °C warmem Wasser von 3 bis 10 Masse-% besitzt.

**Claims**

1. Storable polyol pre-mixture for making flame-retardant polyurethane foam plastics consisting of an ammonium polyphosphate of the general formula

$$H_{(n-m)+2}(NH_4)_mP_nO_{3n+1}$$

in which n stands for an integral average value of 100 to 1 000, m stands for a whole number at most equal to n + 2 and m/n stands for a value of about 1 and

a) a polyesterpolyol or polyetherpolyol or

b) a polyether polyol, and at least one component selected from a foam stabilizer, amine catalyst and expanding agent, as a flame retardant agent,

characterized in that the ammonium polyphosphate has an acid number of 0.01 to about 5 mg KOH/g, contains 0.01 to 0.5 mass % water and 0.5 to about 15 mass % fractions soluble in water at 25 °C, and in that the ammonium polyphosphate consists essentially of crystalline modification II and has been made by reacting a mixture of phosphorus pentoxide and ammonium orthophosphate in a molar ratio of 1 : 0.9 to 1 : 1.1 with 0.1 to 15 mol % melamine or one of its condensation products selected from Melam, Melem or Melon, calculated as melamine and based on the phosphorus pentoxide used, at a temperature of 50 to 150 °C in the presence of an excess of ammonia, and tempering the resulting reaction product at temperatures between 200 and 400 °C.

2. Polyol pre-mixture as claimed in claim 1, wherein the ammonium polyphosphate presents the following particle size distribution in % :

| | |
|---|---|
| < 400 µm | > 99.5 % |
| < 150 µm | > 99.5 % |
| < 75 µm | 99.5 % |
| < 45 µm | 98.0 % |
| < 25 µm | 92.0 % |

3. Polyol pre-mixture as claimed in claim 1 or 2, wherein the ammonium polyphosphate has an acid number of 0.1 to 2 mg KOH/g, contains 0.01 to 0.2 mass % water, and 3 to 10 mass % fractions soluble in water at 25 °C.

**Revendications**

1. Prémélange de polyols stockable pour la préparation de mousses de polyuréthannes ignifuges constitué par un polyphosphate d'ammonium à longue chaîne de formule générale :

$$H_{(n-m)+2}(NH_4)_mP_nO_{3n+1}$$

dans laquelle n est un nombre entier moyen de 100 à 1 000, m représente un nombre entier au plus égal à n + 2 et m/n représente une valeur d'environ 1 et par

a) un polyesterpolyol ou polyétherpolyol ou

b) un polyétherpolyol et au moins un composant choisi parmi un stabilisant de mousse, un catalyseur aminé et un agent porogène, comme ignifugeant,

caractérisé en ce que le polyphosphate d'ammonium présente un indice d'acide de 0,01 à environ 5 mg de KOH/g, une teneur en eau de 0,01 à 0,5 % en masse, ainsi que des fractions solubles dans l'eau de 25 °C de 0,5 à environ 15 % en masse et en ce que le polyphosphate d'ammonium consiste essentiellement en la variété cristalline II et a été préparé par réaction d'un mélange d'anhydride phosphorique et d'orthophosphate d'ammonium dans un rapport molaire de 1 : 0,9 à 1 : 1,1 avec 0,1 à 15 mol % de mélamine ou l'un de ses produits de condensation Mélam, Mélem ou Melon — calculé en mélamine et rapporté à l'anhydride phosphorique utilisé — à une température comprise entre 50 et 150 °C en présence d'un excès d'ammoniac, et ensuite recuit du produit de réaction à des températures comprises entre 20° et 400 °C.

2. Prémélange de polyols selon la revendication 1, caractérisé en ce que le polyphosphate d'ammonium présente la granulométrie suivante en % :

| | |
|---|---|
| < 400 µm | > 99,5 % |
| < 150 µm | > 99,5 % |
| < 75 µm | 99,5 % |
| < 45 µm | 98,0 % |
| < 25 µm | 92,0 % |

3. Prémélange de polyols selon la revendication 1 ou 2, caractérisé en ce que le polyphosphate d'ammonium présente un indice d'acide de 0,1 à 2 mg de KOH/g, une teneur en eau de 0,01 à 0,2 % en masse, ainsi que des fractions solubles dans l'eau à 25 °C de 3 à 10 % en masse.